# EUROPEAN PATENT APPLICATION

(11) **EP 4 717 744 A1**
(43) Date of publication of application: **01.04.2026**
(21) Application number: 24306568.7
(22) Date of filing: 26.09.2024
(51) Int. Cl.: C09J 4/00, C09D 4/00

(54) **USE OF A COMPOSITION BASED ON CYANOACRYLATE AND (METH)ACRYLATE**

(71) Applicant: Bostik SA, 92800 Puteaux (FR)
(72) Inventor: GARRA, Patxi, 08193 Bellaterra, Barcelona (ES); CAMPANYÀ I LLOVET, Maria, 08193 Bellaterra, Barcelona (ES); CRUZ BALAZ, Maria José, 08193 Bellaterra, Barcelona (ES)
(74) Representative: Arkema Patent

(57) **Abstract**

The present invention relates to a composition comprising:
- a cyanoacrylate C;
- a photoinitiator P;
- a (meth)acrylate A;
characterized in that the composition does not comprise a compound having formula (M) and does not comprise a compound having formula (N):
for preparing a coating, said coating having a thickness of at least 150 microns; or
for gap filling, said gap being of at least 150 microns; or
for bonding at least two substrates having a gap between said substrates of at least 150 microns.

## Description

### Field

The present invention relates to the use of a composition based on cyanoacrylate and (meth)acrylate for preparing coating having a thickness of at least 150 microns.

The present invention relates to a method for bonding substrates using a composition based on cyanoacrylate and (meth)acrylate.

### Background

Light curing (photocurable) technologies find applications in various high throughput manufacturing industries as adhesives, gap fillers and coatings. They present the advantage to be fast (less than 60 seconds) and the variety of properties achievable is quite broad for UV acrylates or UV epoxies: High temperature, toughness, impact resistance, etc... This variety of properties is particularly allowed by the broadly available, at industrial scale, of various structures of monomer. Nevertheless, in 1K, UV acrylates are still not robust where the light is not perfectly shined (in shadow areas) and tackiness is still seen due to oxygen inhibition. The same lack of robustness in shadow area is observed for UV epoxies, where heat has to be applied to increase conversion of monomers in shadow areas.

In parallel photocurable cyanoacrylates became interesting due to the lack of oxygen inhibition and robustness in shadow area. Nevertheless, only two polymerizable structures are used in industrially available light curing cyanoacrylates composition: Methoxyethyl cyanoacrylate and Ethyl cyanoacrylate, which limit the scope of said light curing compositions.

Besides, photocurable compositions based on cyanoacrylate and germanium compounds are also known. Their synthesis is costly from expensive starting materials with difficult purification (using column chromatography) making them not practical or economical to produce at scale. It also raises some concerns about toxicity.

Addition of acrylates to improve properties such as thermal strength (through crosslinking), toughness, impact resistance, scratch resistance, hydrolytic resistance, etc... has raised some interest in the last years. However, it was never well controlled and difficult to fully convert the acrylate to get improved properties.

Conventional cyanoacrylate adhesives have generally found limited commercial applications where hot environment exposure is likely as they do not possess simultaneously "hot strength" (or high "service temperature") (i.e. the ability to retain high tensile strength, advantageously approximately higher than 5MPa, while being exposed to elevated temperatures typically above at least 100°C) and heat resistance (ability to not degrade at high temperatures such as for example above 100°C). This "hot strength" feature is important in many applications where the adhesive is submitted to high temperature under load in an early stage of its life, such as in electronics or automotive field. For some applications, hot strength has to be exhibited during significant 10 amount of time e.g. more than 3 days at 150°C. It can concern for examples adhesives used for manufacturing automotive part in a process at elevated temperature, or adhesives used for bonding parts near the car engine.

There is thus a need to provide a new way to remedy at least partially the above-mentioned drawbacks.

There is a need to provide a new method to improve conversion of acrylate and confer high hot strength of the cured assembled substrates.

### Description of the invention

The present invention relates to the use of a composition comprising:
- a cyanoacrylate C;
- a photoinitiator P;
- a (meth)acrylate A;

characterized in that the composition does not comprise a compound having formula (M), and the composition does not comprise a compound having formula (N): 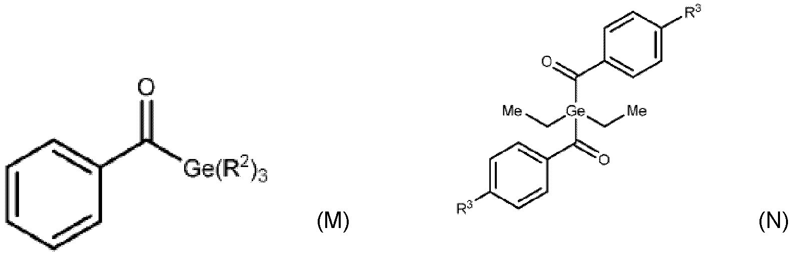
wherein R² is a methyl or a phenyl group; R³ is hydrogen or a methoxy group;
for preparing a coating, said coating having a thickness of at least 150 microns; or for gap filling, said gap being of at least 150 microns; or
for bonding at least two substrates having a gap between said substrates of at least 150 microns.

The present invention also relates to a method for bonding a substrate S1 to a substrate S2, said method comprising the steps of:
1) applying the composition of the invention into a cavity or gap between substrates S1 and S2, said cavity or gap being of at least 150 microns;
2) curing of the composition;
or
said method comprising the steps of:
1') applying the composition of the invention to a substrate S1;
2') contacting the composition applied with a substrate S2, wherein the thickness of the composition applied after step 2') is of at least 150 microns;
3') curing of the composition.

The present invention also relates to a method for coating a substrate comprising the steps of:
i) applying the composition of the invention to a substrate, wherein the thickness of the composition applied is of at least 150 microns,
ii) curing of the composition.

The present invention also relates to a method of filling joins and/or gaps in a substrate comprising the steps of:
a) applying the composition of the invention to the gap and/or join to be filled in the substrate with a thickness of at least 150 microns;
b) curing of the composition in the join and/or gap.

The present invention also relates to an article coated, bonded or gap filled with according to any of the methods disclosed above.

The composition of the invention used in the different above-mentioned uses is specifically discloses here-after.

### Composition

The composition of the invention comprises:
- a cyanoacrylate C;
- a photoinitiator P;
- a (meth)acrylate A;
and said composition does not comprise a compound having formula (M), and the composition does not comprise a compound of formula (N).

### Cyanoacrylate C

As used herein, the term "cyanoacrylate" refers to an organic compound which contains a carbon-carbon double bond, wherein one carbon atom involved in the carbon-carbon double bond is substituted with a cyano (-CN) group and an ester group.

The cyanoacrylate C may be selected from the group consisting of mono-functional cyanoacrylate, multi-functional cyanoacrylate including bifunctional cyanoacrylate, hybrid cyanoacrylate, and mixtures thereof.

The cyanoacrylate C may be cyanoacrylate monomer, oligomer or polymer.

Preferably, the cyanoacrylate C is a cyanoacrylate monomer.

Hybrid cyanoacrylate are cyanoacrylate comprising at least one additional moiety other than a cyanoacrylate moiety, preferably with the capacity to polymerize or react from the additional moiety e.g. monomers comprising a cyanoacrylate moiety and a (meth)acrylate moiety, or monomers comprising a cyanoacrylate moiety and a isocyanate moiety.

Monofunctional cyanoacrylate are well known in the art. See for example the review entitled *"*Adhesives Technology Handbook" by from S. Ebnesajjad Ed., William Andrew, Norwich (2008).

Monofunctional cyanoacrylate has preferably the chemical formula (I): 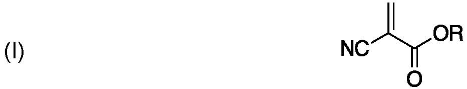 wherein R may be selected from the group consisting of an alkyl group, an alkoxyalkyl group, a trimethylsilylated C1-C3 alkyl group, a cycloalkyl group, an allyl group, an aralkyl group, an aryl group, a haloalkyl group.

The alkyl group, the alkoxyalkyl group, the trimethylsilylated C1-C3 alkyl group, or the allyl group, haloalkyl group may be linear or branched.

The alkyl group, the alkoxyalkyl group, the trimethylsilylated C1-C3 alkyl group, the cycloalkyl group, the allyl group, the aralkyl group, the aryl group, the haloalkyl group may be substituted or unsubstituted.

The alkyl group may be selected from the group consisting of methyl, ethyl, n-propyl, iso-propyl, n-butyl, sec-butyl, iso-butyl, tert-butyl, n-pentyl, 1-methylbutyl, 1-ethylpropyl, neopentyl, n-hexyl, 1-methylpentyl, n-heptyl, n-octyl, 2-octyl, 2-ethylhexyl, n-nonyl, n-decyl, n-undecyl, n-dodecyl, n-octadecyl, and mixtures thereof.

If present, the alkoxy group is selected from the group consisting of methoxy, ethoxy, propyloxy, butyloxy, pentyloxy or hexyloxy. The alkoxyalkyl cyanoacrylate may be selected from the group consisting of 2-methoxyethyl, 2-ethoxyethyl, 2-(1-methoxy)propyl, 2-(2'-methoxyethyl)-methoxyethyl, 2-(2'-methoxy)-ethoxyethyl, 2-(2'-ethoxy)-ethoxyethyl, 2-(2'-propyloxy)-ethoxyethyl, 2-(2'-butoxy)-ethoxyethyl, 2-(2'-pentyloxy)-ethoxyethyl, 2-(2'-hexyloxy)-ethoxyethyl, 2-(2'-methoxy)-propyloxypropyl, 2-(2'-ethoxy)-propyloxypropyl, 2-(2'-propyloxy)-propyloxypropyl, 2-(2'-butyloxy)-propyloxypropyl, 2-(2'-pentyloxy)-propyloxypropyl, 2-(2'-hexyloxy)-propyloxypropyl, 2-(2'-methoxy)-butyloxybutyl, 2-(2'-ethoxy)-butyloxybutyl, 2-(2'-butyloxy)-butyloxybutyl, 2-(3'-methoxy)-propyloxyethyl, 2-(3'-methoxy)-butyloxyethyl, 2-(3'-methoxy)-propyloxypropyl, 2-(3'-methoxy)-butyloxypropyl, 2-(2'-methoxy)-ethoxypropyl, 2-(2'-methoxy)-ethoxybutyl, and mixtures thereof.

Multifunctional cyanoacrylate, including bifunctional cyanoacrylate, are for example disclosed in the article entitled *"*Unequivocal Synthesis of Bis(2-cyanoacrylate) Monomers. Via Anthracene Adduct" by C. Buck, J. Polymer Sci, Polym. Chem Edition, Vol 16, 2475, (1978).

Bifunctional cyanoacrylates have preferably the chemical formula (II): 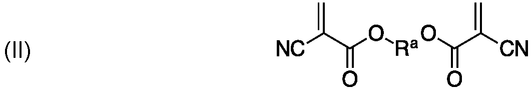 wherein R^{a} is selected from the group consisting of -(CH₂)ₙ with n = 2 to 12, - CH₂(C(CH₃)₂CH₂)-, -CH(CH₃)CH₂CH₂CH(CH₃)-, -CH₂C₆H₄CH₂- including 1,3- or 1,4-disubstituted aromatic), -(CH₂)₄O(CH₂)₄-, -CH₂(CF₂)₃CH₂-, -CH₂Si(CH₃)₂OSi(CH₃)₂CH₂-, - CH₂CH=CHCH₂- or -CH₂C≡CCH₂-.

Hybrid-functional cyanoacrylates, or simply 'hybrid cyanoacrylate' monomers may have the chemical formula (III) or (IV) wherein: 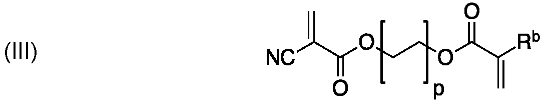 wherein R^{b} is -H or -CH₃; and wherein p is 1; 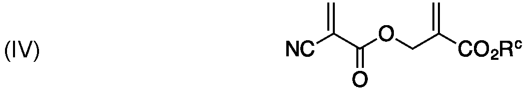 wherein R^{c} is -CH₃ or -C₂H₅.

The cyanoacrylate C may be selected from the group consisting of monomers of structure (I), monomers of structure (II), monomers of structure (III), monomers of structure (IV), and mixtures thereof.

The cyanoacrylate C may be selected from the group consisting of methyl cyanoacrylate, ethyl cyanoacrylate, n-propyl cyanoacrylate, iso-propyl cyanoacrylate, n-butyl cyanoacrylate, sec-butyl cyanoacrylate, iso-butyl cyanoacrylate, tert-butyl cyanoacrylate, n-pentyl cyanoacrylate, 1-methylbutyl cyanoacrylate, 1-ethylpropyl cyanoacrylate, neopentyl cyanoacrylate, n-hexyl cyanoacrylate, 1-methylpentyl cyanoacrylate, n-heptyl cyanoacrylate, n-octyl cyanoacrylate, 2-octyl cyanoacrylate, 2-ethylhexyl cyanoacrylate, n-nonyl cyanoacrylate, n-decyl cyanoacrylate, n-undecyl cyanoacrylate, n-dodecyl cyanoacrylate, n-octadecyl cyanoacrylate, allyl cyanoacrylate, cyclohexyl cyanoacrylate, 2-methoxyethyl cyanoacrylate, 2-ethoxyethyl cyanoacrylate, phenoxyethyl cyanoacrylate, 2-(1-alkoxy)propyl cyanoacrylate (for example 2-(1-methoxy)propyl cyanoacrylate), 2-(2'-alkoxy)-methoxyethyl-2"-cyanoacrylate (for example 2-(2'-methoxy)-methoxyethyl-2"-cyanoacrylate), 2-(2'-alkoxy)-ethoxyethyl-2"-cyanoacrylate (for example 2-(2'-methoxy)-ethoxyethyl-2"-cyanoacrylate, 2-(2'-ethoxy)-ethoxyethyl-2"-cyanoacrylate, 2-(2'-propyloxy)-ethoxyethyl-2"-cyanoacrylate, 2-(2'-butoxy)-ethoxyethyl-2"-cyanoacrylate, 2-(2'-pentyloxy)-ethoxyethyl-2"-cyanoacrylate or 2-(2'-hexyloxy)-ethoxyethyl-2"-cyanoacrylate), 2-(2'-alkoxy)-propyloxypropyl-2"-cyanoacrylate (for example 2-(2'-methoxy)-propyloxypropyl-2"-cyanoacrylate, 2-(2'-ethoxy)-propyloxypropyl-2"-cyanoacrylate, 2-(2'-propyloxy)-propyloxypropyl-2"-cyanoacrylate, 2-(2'-butyloxy)-propyloxypropyl- 2"-cyanoacryl ate, 2-(2'-pentyloxy)-propyloxypropyl-2"-cyanoacrylate, 2-(2'-hexyl oxy)-propyloxypropyl-2"-cyanoacrylate), 2-(2'-alkoxy)-butyloxybutyl-2"-cyanoacrylate (for example 2-(2'-methoxy)-butyloxybutyl-2"-cyanoacrylate, 2-(2'-ethoxy)-butyloxybutyl-2"-cyanoacrylate, 2-(2'-butyloxy)-butyloxybutyl-2"-cyanoacrylate), 2-(3'-alkoxy)-propyloxyethyl-2"-cyanoacrylate for example 2-(3'-methoxy)-propyloxyethyl-2"-cyanoacrylate), 2-(3'-alkoxy)-butyloxyethyl-2''-cyanoacrylate (for example 2-(3'- methoxy)-butyloxyethyl-2"-cyanoacrylate), 2-(3'-alkoxy)-propyloxypropyl-2"-cyanoacrylate (for example 2-(3'-methoxy)-propyloxypropyl-2"-cyanoacrylate), 2-(3'-alkoxy)-butyloxypropyl-2"-cyanoacrylate (for example 2-(3'-methoxy)-butyloxypropyl-2"-cyanoacrylate 2-(2'-alkoxy)-ethoxypropyl-2"-cyanoacrylate (for example 2-(2'-methoxy)-ethoxypropyl-2"-cyanoacrylate), 2-(2'-alkoxy)-ethoxybutyl-2"-cyanoacrylate (for example 2-(2'-methoxy)-ethoxybutyl-2"-cyanoacrylate), trimethylsilyethyl cyanoacrylate, trimethylsilypropyl cyanoacrylate, trimethylsilyloxyethyl cyanoacrylate triethylsilyloxyethyl cyanoacrylate, phenylethyl cyanoacrylate, and mixtures thereof.

Preferably, the cyanoacrylate C is a mono-functional cyanoacrylate, more preferably selected from the group consisting of 2-methoxyethyl cyanoacrylate, methyl cyanoacrylate, ethyl cyanoacrylate, n-butyl cyanoacrylate, n-heptyl cyanoacrylate, 2 ethylhexyl cyanoacrylate, n-octyl cyanoacrylate, iso-propyl cyanoacrylate or mixtures thereof.

Even more preferably, the cyanoacrylate C is 2-methoxyethyl cyanoacrylate or ethyl cyanoacrylate.

The composition preferably comprises from 60% to 99.5% by weight of cyanoacrylate(s) C, more preferably from 70% to 99% by weight of cyanoacrylate(s) C, and even more preferably from 80% to 97% by weight of cyanoacrylate(s) C based on the total weight of the composition.

### Photoinitiator

The photoinitiator P may be a photoinitiator having Norrish type I activity and/or Norrish type II activity, more particularly it is a radical photoinitiator having Norrish type I activity.

The photoinitiator P is preferably selected from the group consisting of benzoins, benzoin ethers, acetophenones, α-hydroxy acetophenones, benzil, benzil ketals, anthraquinones, phosphine oxides, acylphosphine oxides, α-hydroxyketones, phenylglyoxylates, α-aminoketones, benzophenones, thioxanthones, xanthones, acridine derivatives, phenazine derivatives, quinoxaline derivatives, triazine compounds, benzoyl formates, aromatic oximes, metallocenes, acylsilyl compounds, camphorquinones, polymeric derivatives thereof, and mixtures thereof.

Examples of suitable photoinitiators P include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, , 2-isopropylthioxanthone, thioxanthone, diethyl thioxanthone, 1,5-acenaphthylene, benzil, α-hydroxyketone, 2,4,6-trimethylbenzoyldiphenyl phosphine oxide, , 2,2-dimethoxy-1,2-diphenylethanone, 1-hydroxycyclohexyl phenyl ketone, 2-methyl-1-[4-(methylthio) phenyl]-2-morpholinopropanone, 2-hydroxy-2-methyl-1-phenyl-propanone, oligomeric α-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid sodium salt monohydrate, (benzene) tricarbonylchromium, benzoin isobutyl ether, benzophenone/1-hydroxycyclohexyl phenyl ketone 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone 50/50 blend, 4'-ethoxyacetophenone, 2,4,6-trimethylbenzoyldiphenylphosphine oxide, , 3'-hydroxyacetophenone, 4'-hydroxyacetophenone, 3-hydroxybenzophenone, 4-hydroxybenzophenone, 2-methylbenzophenone, 3-methylbenzophenone, methybenzoylformate, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, and combinations thereof.

Preferably, the photoinitiator P is selected from acyl phosphine oxides, and more preferably the photoinitiator P is selected from the group consisting of: phenyl bis(2,4,6-trimethylbenzoyl)phosphine oxide (BAPO), diphenyl (2,4,6-trimethylbenzoyl)phosphine oxide (TPO), Ethyl phenyl(2,4,6-trimethylbenzoyl)phosphinate (TPO-L), benzoyl-diphenylphosphine oxide (BDPO), 2,4,6-trimethylbenzoyl-methoxy-phenylphosphine oxide (TMMPO), phthaloyl-bis(diphenylphosphine oxide) (PBDPO), 2,6-difluoro benzoyl-diphenylphosphine oxide (DFDPO), compounds having the following formula : 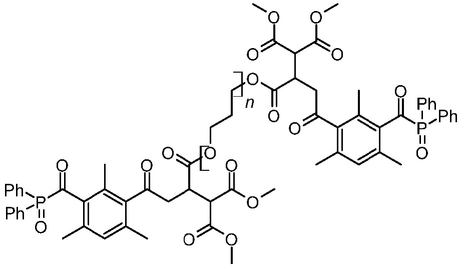 wherein n represents an integer from 1 to 50 (preferably from 1 to 20, more preferably from 1 to 10),
and mixtures thereof.

Suitable photoinitiators are commercially available under the denominations Irgacure^{®} 819 (BASF) or Darocur^{®} TPO (BASF) for phenyl-substituted acyl phosphines; Irgacure^{®} 184/500/2959 (BASF) or Darocur^{®} 1173 (BASF) for alpha-hydroxy ketones; lrgacure^{®}651 (BASF) for benzyldimethylketals, Irgacure^{®} 754 (BASF) or Darocur^{®} MBF (BASF) for phenylglyoxylates; from Sigma-Aldrich Merck for camphorquinone; and from Sigma-Aldrich Merck for dialkylsilylglyoxylates.

The composition preferably comprises from 50 to 6000 ppm, more preferably from 200 to 5000 ppm of photoinitiator P based on the total weight of the composition.

### (Meth)acrylate A

In the present invention, the (meth)acrylate A is different from the cyanoacrylate C.

Preferably, the (meth)acrylate A does not comprise cyano group.

The (meth)acrylate A may be selected from the group consisting of a (meth)acrylate-functionalized monomer, a (meth)acrylate-functionalized oligomer and mixtures thereof.

As used herein, the term "(meth)acrylate-functionalized monomer" means a monomer comprising a (meth)acrylate group, in particular an acrylate group. The term "(meth)acrylate-functionalized oligomer" means an oligomer comprising a (meth)acrylate group, in particular an acrylate group. The term "(meth)acrylate group" encompasses acrylate groups (-O-CO-CH=CH₂) and methacrylate groups -O-CO-C(CH₃)=CH₂).

(Meth)acrylate-functionalized monomer may have a molecular weight of less than 600 g/mol, in particular from 100 to 550 g/mol, more particularly 200 to 500 g/mol.

(Meth)acrylate-functionalized monomer may have 1 to 6 (meth)acrylate groups, in particular 1 to 3 (meth)acrylate groups.

The (meth)acrylate-functionalized monomer may comprise a mixture of (meth)acrylate-functionalized monomers having different functionalities. For example the (meth)acrylate-functionalized monomer may comprise a mixture of a (meth)acrylate-functionalized monomer containing a single acrylate or methacrylate group per molecule (referred to herein as "mono(meth)acrylate-functionalized compounds") and a (meth)acrylate-functionalized monomer containing 2 or more, preferably 2 or 3, acrylate and/or methacrylate groups per molecule.

In one embodiment, the (meth)acrylate functionalized monomer comprises a mono(meth)acrylate-functionalized monomer.

Examples of suitable mono(meth)acrylate-functionalized monomers include, but are not limited to, mono-(meth)acrylate esters of aliphatic alcohols (wherein the aliphatic alcohol may be straight chain, branched or alicyclic and may be a mono-alcohol, a di-alcohol or a polyalcohol, provided only one hydroxyl group is esterified with (meth)acrylic acid); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols and oligoglycols; mono-(meth)acrylate esters of alkoxylated (e.g., ethoxylated and/or propoxylated) aliphatic alcohols (wherein the aliphatic alcohol may be straight chain, branched or alicyclic and may be a mono-alcohol, a di-alcohol or a polyalcohol, provided only one hydroxyl group of the alkoxylated aliphatic alcohol is esterified with (meth)acrylic acid); mono-(meth)acrylate esters of alkoxylated (e.g., ethoxylated and/or propoxylated) aromatic alcohols (such as alkoxylated phenols); caprolactone mono(meth)acrylates; and the like.

Preferably, the mono(meth)acrylate functionalized monomer is selected from the group consisting of: methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; alkoxylated phenol (meth)acrylates; alkoxylated nonylphenol (meth)acrylates; cyclic trimethylolpropane formal (meth)acrylate; isobornyl (meth)acrylate; tricyclodecanemethanol (meth)acrylate; tert-butylcyclohexanol (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; and combinations thereof.

Examples of mono(meth)acrylate functionalized monomers are commercially available under the denominations SR-531, SR-789 from Sartomer.

In another embodiment, the (meth)acrylate functionalized monomer may comprise a (meth)acrylate-functionalized monomer containing two or more (meth)acrylate groups per molecule.

Examples of suitable (meth)acrylate-functionalized monomers containing two or more (meth)acrylate groups per molecule include acrylate and methacrylate esters of polyols. Examples of suitable polyols are as listed above for P_{OH}. Such polyols may be fully or partially esterified (with (meth)acrylic acid, (meth)acrylic anhydride, (meth)acryloyl chloride or the like), provided they contain at least two (meth)acrylate functional groups per molecule.

Exemplary (meth)acrylate-functionalized monomers containing two or more (meth)acryloyloxy groups per molecule may include bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth)acrylate; dipropylene glycol di(meth)acrylate; tripropylene glycol di(meth)acrylate; tetrapropylene glycol di(meth)acrylate; polypropylene glycol di(meth)acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth)acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; 2-methyl-2,4-pentanediol di(meth)acrylate; polybutadiene di(meth)acrylate; cyclohexane-1,4-dimethanol di(meth)acrylate; tricyclodecane dimethanol di(meth)acrylate; metallic di(meth)acrylates; modified metallic di(meth)acrylates; glyceryl di(meth)acrylate; glyceryl tri(meth)acrylate; trimethylolethane tri(meth)acrylate; trimethylolethane di(meth)acrylate; trimethylolpropane tri(meth)acrylate; trimethylolpropane di(meth)acrylate; pentaerythritol di(meth)acrylate; pentaerythritol tri(meth)acrylate; pentaerythritol tetra(meth)acrylate, di(trimethylolpropane) diacrylate; di(trimethylolpropane) triacrylate; di(trimethylolpropane) tetraacrylate, sorbitol penta(meth)acrylate; di(pentaerythritol) tetraacrylate; di(pentaerythritol) pentaacrylate; di(pentaerythritol) hexa(meth)acrylate; tris (2-hydroxyethyl) isocyanurate tri(meth)acrylate; dendritic acrylates; as well as the alkoxylated (e.g., ethoxylated and/or propoxylated) derivatives thereof; and combinations thereof.

The (meth)acrylate functionalized oligomer may have 1 to 18 (meth)acrylate groups, in particular 2 to 6 (meth)acrylate groups, more particularly 2 to 6 acrylate groups.

The (meth)acrylate functionalized oligomer may have a number average molecular weight equal or more than 600 g/mol, in particular 800 to 15,000 g/mol, more particularly 1,000 to 5,000 g/mol.

Preferably, the (meth)acrylate-functionalized oligomers is selected from the group consisting of (meth)acrylate-functionalized urethane oligomers (sometimes also referred to as "urethane (meth)acrylate oligomers," "polyurethane (meth)acrylate oligomers" or "carbamate (meth)acrylate oligomers"), (meth)acrylate-functionalized epoxy oligomers (sometimes also referred to as "epoxy (meth)acrylate oligomers"), (meth)acrylate-functionalized polyether oligomers (sometimes also referred to as "polyether (meth)acrylate oligomers"), (meth)acrylate-functionalized polydiene oligomers (sometimes also referred to as "polydiene (meth)acrylate oligomers"), (meth)acrylate-functionalized polycarbonate oligomers (sometimes also referred to as "polycarbonate (meth)acrylate oligomers"), and (meth)acrylate-functionalized polyester oligomers (sometimes also referred to as "polyester (meth)acrylate oligomers") and mixtures thereof.

Preferably, the (meth)acrylate-functionalized oligomer comprises a (meth)acrylate-functionalized urethane oligomer, more preferably an acrylate-functionalized urethane oligomer.

Advantageously, the (meth)acrylate-functionalized oligomer comprises a (meth)acrylate-functionalized urethane oligomer having two (meth)acrylate groups, more preferably an acrylate-functionalized urethane oligomer having two acrylate groups.

Exemplary polyester (meth)acrylate oligomers include the reaction products of acrylic or methacrylic acid or mixtures or synthetic equivalents thereof with hydroxyl group-terminated polyester polyols. The reaction process may be conducted such that all or essentially all of the hydroxyl groups of the polyester polyol have been (meth)acrylated, particularly in cases where the polyester polyol is difunctional. The polyester polyols can be made by polycondensation reactions of polyols (in particular, diols) and polycarboxylic acid functional compounds (in particular, dicarboxylic acids and anhydrides). The polyol and polycarboxylic acid functional compounds can each have linear, branched, cycloaliphatic or aromatic structures and can be used individually or as mixtures. Oligomers may be commercially available from Sartomer or Bomar.

Examples of suitable epoxy (meth)acrylates include the reaction products of acrylic or methacrylic acid or mixtures thereof with an epoxy resin (polyglycidyl ether or ester). The epoxy resin may, in particular, by selected from bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-1,4-dioxane, bis(3,4-epoxycyclohexylmethyl)adipate, bis(3,4-epoxy-6-methylcyclohexylmethyl)adipate, 3,4-epoxy-6-methylcyclohexyl-3',4'-epoxy-6'-methylcyclohexanecarboxylate, dicyclopentadiene diepoxide, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, polyglycidyl ethers of a polyether polyol obtained by the addition of one or more alkylene oxides to an aliphatic polyhydric alcohol such as ethylene glycol, propylene glycol and glycerol, diglycidyl esters of aliphatic C6-C22 dibasic acids, glycidyl esters of C30-36 dimers of fatty acids, an epoxidized vegetable oil (such as epoxidized soybean oil and epoxidized linseed oil), epoxidized polybutadiene, and the like.

Suitable polyether (meth)acrylate oligomers include, but are not limited to, the condensation reaction products of acrylic or methacrylic acid or synthetic equivalents or mixtures thereof with polyetherols which are polyether polyols (such as polyethylene glycol, polypropylene glycol or polytetramethylene glycol). Suitable polyetherols can be linear or branched substances containing ether bonds and terminal hydroxyl groups. Polyetherols can be prepared by ring opening polymerization of cyclic ethers such as tetrahydrofuran or alkylene oxides (e.g., ethylene oxide and/or propylene oxide) with a starter molecule. Suitable starter molecules include water, polyhydroxyl functional materials, polyester polyols and amines.

Polyurethane (meth)acrylate oligomers (sometimes also referred to as "urethane (meth)acrylate oligomers") suitable for use in Composition A include urethanes based on aliphatic, cycloaliphatic and/or aromatic polyester polyols and polyether polyols and aliphatic, cycloaliphatic and/or aromatic polyester diisocyanates and polyether diisocyanates capped with (meth)acrylate end-groups. Suitable polyurethane (meth)acrylate oligomers include, for example, aliphatic polyester-based urethane di- and tetra-acrylate oligomers, aliphatic polyether-based urethane di- and tetra-acrylate oligomers, as well as aliphatic polyester/polyether-based urethane di- and tetra-acrylate oligomers.

The polyurethane (meth)acrylate oligomers may be prepared by reacting aliphatic, cycloaliphatic and/or aromatic polyisocyanates (e.g., diisocyanate, triisocyanate) with OH group terminated polyester polyols, polyether polyols, polycarbonate polyols, polycaprolactone polyols, polyorganosiloxane polyols (e.g., polydimethylsiloxane polyols), or polydiene polyols (e.g., polybutadiene polyols), or combinations thereof to form isocyanate-functionalized oligomers which are then reacted with hydroxyl-functionalized (meth)acrylates (such as 2-hydroxyethyl (meth)acrylate or 3-hydroxypropyl (meth)acrylate) to provide terminal (meth)acrylate groups. For example, the polyurethane (meth)acrylate oligomers may contain two, three, four or more (meth)acrylate functional groups per molecule. Other orders of addition may also be practiced to prepare the polyurethane (meth)acrylate, as is known in the art. For example, the hydroxyl-functionalized (meth)acrylate may be first reacted with a polyisocyanate to obtain an isocyanate-functionalized (meth)acrylate, which may then be reacted with an OH group terminated polyester polyol, polyether polyol, polycarbonate polyol, polycaprolactone polyol, polydimethylsiloxane polyol, polybutadiene polyol, or a combination thereof. In yet another embodiment, a polyisocyanate may be first reacted with a polyol, including any of the aforementioned types of polyols, to obtain an isocyanate-functionalized polyol, which is thereafter reacted with a hydroxyl-functionalized (meth)acrylate to yield a polyurethane (meth)acrylate. Alternatively, all the components may be combined and reacted at the same time.

Suitable acrylic (meth)acrylate oligomers (sometimes also referred to in the art as "acrylic oligomers") include oligomers which may be described as substances having an oligomeric acrylic backbone which is functionalized with one or (meth)acrylate groups (which may be at a terminus of the oligomer or pendant to the acrylic backbone). The acrylic backbone may be a homopolymer, random copolymer or block copolymer comprised of repeating units of acrylic monomers. The acrylic monomers may be any monomeric (meth)acrylate such as C1-C6 alkyl (meth)acrylates as well as functionalized (meth)acrylates such as (meth)acrylates bearing hydroxyl, carboxylic acid and/or epoxy groups. Acrylic (meth)acrylate oligomers may be prepared using any procedures known in the art, such as by oligomerizing monomers, at least a portion of which are functionalized with hydroxyl, carboxylic acid and/or epoxy groups (e.g., hydroxyalkyl(meth)acrylates, (meth)acrylic acid, glycidyl (meth)acrylate) to obtain a functionalized oligomer intermediate, which is then reacted with one or more (meth)acrylate-containing reactants to introduce the desired (meth)acrylate functional groups.

Preferably, the (meth)acrylate A is a (meth)acrylate functionalized monomer.

More preferably, the (meth)acrylate A is a (meth)acrylate functionalized monomer comprising a (meth)acrylate-functionalized monomer containing two or more (meth)acrylate groups per molecule.

More preferably, the (meth)acrylate A is a (meth)acrylate functionalized monomer comprising a (meth)acrylate-functionalized monomer containing two or more (meth)acrylate groups per molecule and having a glass transition temperature greater than or equal to 110°C, more preferably greater than or equal to 150°C, as measured byDynamic Mechanical Thermal Analysis according to ISO 6721-1:2011.

More preferably, the (meth)acrylate A is a (meth)acrylate functionalized monomer selected from the group consisting of butanediol di(meth)acrylate, hexanediol di(meth)acrylate, diethylene glycol di(meth)acrylate, triethyleneglycol di(meth)acrylate, polyethylene glycol di(meth)acrylate, trimethylolpropane tri(meth)acrylate (TMPTA), ethoxylatedtrimethylolpropane tri(meth)acrylate, neopentylglycoldiacrylate, pentaerythritoltetraacrylate (PETA), pentaerythritoltetramethacrylate (PETMA), dipentaerythritolpenta(meth)acrylate, tris (2-hydroxy ethyl) isocyanurate tri(meth)acrylate , dipentaerythritolhexa(meth)acrylate, dendritric acrylates (commercialized for example by BOMAR such as for example BDT-4330 and BDT-1015), bisphenol-A-diacrylate, bisphenol-A-dimethacrylate, ethoxylatedbisphenol-A-diacrylate, tricyclodecane dimethanol diacrylate (commercially available as Sartomer SR833S), propoxylatedbisphenol-A-diacrylate, and mixtures thereof.

Even more preferably, the (meth)acrylate A is a (meth)acrylate functionalized monomer selected from the group consisting of butanediol di(meth)acrylate, hexanediol di(meth)acrylate, diethylene glycol di(meth)acrylate, triethyleneglycol di(meth)acrylate, polyethylene glycol di(meth)acrylate, trimethylolpropane tri(meth)acrylate (TMPTA), ethoxylatedtrimethylolpropane tri(meth)acrylate, neopentylglycoldiacrylate, pentaerythritoltetraacrylate (PETA), pentaerythritoltetramethacrylate (PETMA), dipentaerythritolpenta(meth)acrylate, tris (2-hydroxy ethyl) isocyanurate tri(meth)acrylate , dipentaerythritolhexa(meth)acrylate), bisphenol-A-diacrylate, bisphenol-A-dimethacrylate, ethoxylatedbisphenol-A-diacrylate, tricyclodecane dimethanol diacrylate (commercially available as Sartomer SR833S), propoxylatedbisphenol-A-diacrylate, and mixtures thereof.

The composition preferably comprises from 5 to 45% by weight, more preferably from 10% to 30% by weigth of (meth)acrylate(s) based on the total weight of the composition.

### Metallocene compound

The composition preferably comprises a metallocene compound.

The metallocene compound may be selected from the group consisting of ferrocene compounds, ruthenocene compounds, bis(cyclopentadieneyl) osmium compounds, their derivatives thereof, and mixtures thereof.

Preferably, the metallocene compound is selected from ferrocene compounds, its derivatives, and mixtures thereof.

The metallocene compound is preferably the ferrocene compound of formula (V): 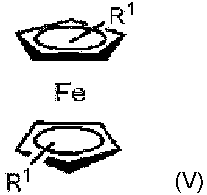 wherein R¹ is a hydrogen or a C1-C4 alkyl group, and wherein one or more R¹ are present in one or both rings. Suitable ferrocene compounds are for example disclosed in US 5824180 and US6503959.

Preferably, in the ferrocene compound of formula (V), R¹ is hydrogen.

The composition may comprise from 50 ppm to 500 ppm by weight of metallocene compound based on the total weight of the composition.

### Optional thickener

The composition may comprise at least one thickener.

A suitable thickener or thickening agent may be selected from those which are compatible with the cyanoacrylate.

Preferably, the thickener is selected from the group consisting of poly(meth)acrylates, polyvinylpyrrolidones, polyvinyl acetates, partially hydrolysed polyvinyl acetates, vinyl acetate copolymers, acylated cellulose polymers, polyoxylates, polycaprolactones, ethylene-acrylic copolymers, copolymers of lactic acid and caprolactone, and mixtures thereof.

The vinyl acetate copolymers may be copolymers of polyvinyl chloride and polyvinyl acetate, copolymers of polyethylene and polyvinyl acetate.

The copolymers typically include terpolymers. For example, copolymers ethylene-acrylic comprises terpolymers of ethylene-methylacrylate-carboxylic acid-based monomers.

Copolymers of polyethylene and polyvinyl acetate are typically commercially available under the tradename LEVAMELT by Lanxess. Examples are LEVAMELT^{®}400, LEVAMELT^{®} 600 and LEVAMELT^{®} 900. The LEVAMELT products typically differs in the amount of vinyl acetate present. For example, LEVAMELT^{®} 400 comprises an ethylene-vinyl acetate copolymer comprising 40 wt% vinyl acetate.

Examples of copolymers of polyvinyl chloride and polyvinyl acetate are VINNOL products commercialized by Wacker, such as for example Vinnol^{®} H40-60. It covers both copolymers and terpolymers.

Examples of copolymers of ethylene, acrylate (butyl or methyl) and carboxylic acid-based monomers are Vamac^{®} G or Vamac^{®} Ultra LT from DuPont.

If present, the total content of thickener (including mixtures of thickener) in the composition may range from 2 wt.% to 18 wt.%, preferably from 3 wt.% to 12 wt.%, and more preferably from 4 wt.% to 10 wt.% based on the total weight of the composition.

Preferably, the thickener is selected from the group consisting of vinyl acetate copolymers, poly(meth)acrylates, ethylene-acrylic copolymers, and mixtures thereof.

More preferably, the thickener is selected from the group consisting of poly(meth)acrylates, copolymer of polyethylene and polyvinyl acetate, copolymers of polyvinyl chloride and polyvinyl acetate, copolymers of ethylene, methylacrylate and carboxylic acid-based monomers, and mixtures thereof.

### Optional additive

The composition may comprise at least one additive preferably selected from the group consisting of: an acid stabilizing agent, a radical stabilizing agent, an adhesion promoter for metal, an adhesion promoter for glass/tile, a pigment, a dye, a color changing dye, a fluorophore, a color changing fluorophore, a thixotropic agent, a toughener, an accelerating agent, a filler, a plasticizer, and mixtures thereof.

Radical stabilizing agents are typically radical polymerization inhibitors, and are preferably selected from the group consisting of 4-methoxyphenol, hydroquinone, hydroquinone monomethyl ether, hydroxytoluene butyl ether, hydroxyanisole butyl ether, 4,4'-methylenebis (2,6-di-tert-butylphenol), and mixtures thereof.

The total content of radical stabilizing agent(s) in the composition, may range from 0% to 0.2% by weight, preferably from 0.001 % to 0.1 % by weight based on the total weight of said composition.

The acid stabilizing agents are typically inhibitors of the anionic polymerization. The acid stabilizing agent may be selected from the group consisting of Bronsted acids, Lewis acids, and mixtures thereof. The acid stabilizing agent is preferably selected from the group consisting of methanesulfonic acid, boron trifluoride etherate, p-toluenesulfonic acid, hydrofluoric acid, sulphur dioxide, and mixtures thereof.

A suitable accelerating agent (or accelerator) may be selected from calixarenes, crown ethers (for example, 15 Crown 5, 18 Crown 6, Dibenzo 18 Crown 6, commercialized by Alfa Aesar), cyclodextrins, and mixtures thereof.

The content of accelerating agent in the composition may range from 0% to 1%, preferably from 0.1% to 1% by weight based on the total weight of said composition.

Typically, an adhesion promoter may be chosen from the group consisting of aromatic carboxylic acid or anhydride, and preferably from the group consisting of trimellitic acid, trimellitic anhydride, cis-1,2,3,6-tetrahydrophthalic anhydride, pyromellitic acid, pyromellitic anhydride, dianhydride of 3,3',4,4'-benzophenonetetracarboxylic acid, itaconic acid, itaconic anhydride, 3-buten-1,2,3-tricarboxylic acid, and mixtures thereof.

The total content of adhesion promoter(s) in the composition may range from 0 wt.% to 0.1 wt.%, preferably from 0.01 wt.% to 0.05 wt.% based on the total weight of the composition.

A suitable thixotropic agent may be selected from the group consisting of hydrogenated castor oil optionally modified by reaction with an amine, polyamides, silica, and mixtures thereof.

Preferably, the thixotropic agent is silica, more preferably fumed silica, even more preferably hydrophobic fumed silica. Hydrophobic fumed silica may also act as a filler. A hydrophobic fumed silica is commercially available under the commercial denomination Aerosil^{®} R202 from Evonik.

If present, the composition may comprise from 2% to 10% by weight, preferably from 3% to 9% by weight, more preferably from 7% to 9% by weight, of thixotropic agents by total weight of the composition.

Suitable tougheners or toughening agents may be block copolymers such as, for example, polymethylmethacrylate-co-polybutylacrylate-co-polymethylmethacrylate, for example commercially available as Kurarity LA2140; elastomeric rubbers; elastomeric polymers; liquid elastomers; polyesters; acrylic rubbers; butadiene/acrylonitrile rubber; Buna rubber; liquid rubbers (such as for example the ones marketed by Kuraray, LIR-50, LIR-403;LIR410); polyisobutylene; polyisoprene; natural rubber; synthetic rubber such as for example styrene/butadiene rubber (SBR); polyurethane polymers; fluorinated rubbers; isoprene-acrylonitrile polymers; chlorosulfonated polyethylenes; block copolymers; core-shell rubber particles (such as clearstrength^{®} XT150), and mixtures thereof.

Typically, the content of toughening agent in the composition ranges from 0 wt.% to 15 wt.%, preferably from 3 wt.% to 8 wt.%, and more preferably from 4 wt.% to 7 wt.% based on the total weight of the composition.

The plasticizer may be any plasticizer comprising at least one ester group. The plasticizer may be selected from the group consisting of: phthalates, azelates, adipates, alkyl sebacates, and mixtures thereof.

The plasticizer may be selected from trimethyl trimellitate, diethylene glycol dibenzoate, diethyl malonate, triethyl-O-acetyl citrate, benzylbutylphtalate, dipropylene glycol dibenzoate, diethyl adipate, tributyl-O-acetyl citrate, dimethyl sebacate, and mixtures thereof.

Preferably, the total content of additive(s) in the composition is lower than 10 % by weight, more preferably lower than 5 % by weight, even more preferably lower than 2 wt% based on the total weight of the composition.

Preferably, the composition does not comprise compound comprising Ge atoms.

### Uses/methods/Article

The present invention relates to the use of the composition as defined above
for preparing a coating, said coating having a thickness of at least 150 microns; or
for gap filling, said gap being of at least 150 microns; or
for bonding at least two substrates having a gap between said substrates of at least 150 microns.

Preferably, the thickness ranges from 150 to 2 000 microns.

More preferably, the thickness ranges from 200 to 600 microns.

Even more preferably, the thickness ranges from 300 to 600 microns.

Preferably, the gap ranges from 150 to 2000 microns.

More preferably, the gap ranges from 200 to 600 microns.

Even more preferably, the gap ranges from 300 to 600 microns.

The present invention also relates to a method for bonding a substrate S1 to a substrate S2, said method comprising the steps of:
1) applying the composition of the invention into a cavity or gap between substrates S1 and S2, said cavity or gap being of at least 150 microns;
2) curing of the composition;
or
said method comprising the steps of:
1') applying the composition of the invention to a substrate S1;
2') contacting the composition applied with a substrate S2, wherein the thickness of the composition applied after step 2') is of at least 150 microns;
3') curing of the composition.

Preferably, the thickness ranges from 150 to 2000 microns.

More preferably, the thickness ranges from 200 to 600 microns.

Even more preferably, the thickness ranges from 300 to 600 microns.

Preferably, the gap ranges from 150 to 2000 microns.

More preferably, the gap ranges from 200 to 600 microns.

Even more preferably, the gap ranges from 300 to 600 microns.

The present invention also relates to a method for coating a substrate comprising the steps of:
i) applying the composition of the invention to a substrate, wherein the thickness of the composition applied is of at least 150 microns,
ii) curing of the composition.

Preferably, the thickness ranges from 150 to 2000 microns.

More preferably, the thickness ranges from 200 to 600 microns.

Even more preferably, the thickness ranges from 300 to 600 microns.

Preferably, the gap ranges from 150 to 2000 microns.

More preferably, the gap ranges from 200 to 600 microns.

Even more preferably, the gap ranges from 300 to 600 microns.

The present invention also relates to a method of filling joins and/or gaps in a substrate comprising the steps of:
a) applying the composition of the invention to the gap and/or join to be filled in the substrate with a thickness of at least 150 microns;
b) curing of the composition in the join and/or gap.

Preferably, the thickness ranges from 150 to 2000 microns.

More preferably, the thickness ranges from 200 to 600 microns.

Even more preferably, the thickness ranges from 300 to 600 microns.

The present invention also relates to an article coated, bonded or gap filled with according to any one of the methods disclosed above.

The article is preferably a build structure, in particular in construction or civil engineering, or an industrial good or a consumer good, in particular a window, a domestic appliance, or a mode of transport, in particular a water or land vehicle, preferably an automobile, a bus, a truck, a train or a ship, or an installable component of a mode of transport.

The applying of the composition to at least one of the substrate may be carried out in any known conventional manner, for example, by spraying, jetting, knife coating, roller coating, casting, drum coating, dipping, and the like and combinations thereof.

The curing (mentioned in all the methods/uses herein) is preferably carried out under actinic radiation and/or humidity/surface curing.

The curing (mentioned in all the methods/uses) is even more preferably carried out under actinic radiation.

The actinic radiation preferably includes infrared radiation, near-infrared radiation, visible light, UV radiation, electron irradiation (Electron Beam Curing) or X-ray radiation. More preferably, the actinic radiation is a UV radiation.

The actinic radiation source may be any curing lamps known by the skilled person. Preferably, the curing lamp is selected from light-emitting diode, mercury lamp, quartz tungsten halogen light, and Electron-beam lamp.

Preferably, the actinic radiation is carried out with a light-emitting diode UV.

The UV radiation has preferably a wavelength ranging from 100 to 800nm, more preferably from 395 to 600 nm, and even more preferably at 405 nm.

The UV radiation has preferably an irradiance ranging from 3 to 100 mW/cm2.

The substrates, such as substrate S1 and substrate S2, may be any kind of substrate. Examples of substrates may be selected from the group consisting of Acrylonitrile butadiene styrene (ABS, polycarbonate (PC), Polybutylene terephthalate (PBT), Polyamides (PA), inked glass, glass, stainless steel, mild steel, aluminium, polymethylmethacrylate (PMMA), wood, polyethylene terephthalate (PET), nitrile butadiene rubber (NBR), leather, polyvinylchloride (PVC), fabric, copper, nickel, neodymium, phenolic resin, polystyrene, polyethylene, polypropylene.

The substrates, in particular S1 and S2, may be identical or different.

The present invention also relates to a method of conferring improved hot strength to a cured product of a composition, said method comprising:
1) Providing a composition comprising a cyanoacrylate C, a photoinitiator P, a (meth)acrylate A, said composition does not comprise a compound having formula (M) and said composition does not comprise a compound having formula (N);
2) Applying the composition to at least one substrate and;
3) Contacting the substrates together;
4) Curing for a time sufficient to form a cured product of the composition therebetween to form a bonded assembly wherein the thickness of the composition applied after step 2) is of at least 150 microns.

Preferably, the thickness ranges from 150 to 2000 microns.

More preferably, the thickness ranges from 200 to 600 microns.

Even more preferably, the thickness ranges from 300 to 600 microns.

The above-mentioned paragraphs can be combined one with each other. For examples, the preferred embodiments for the compositions can be combined all together, and combined with the preferred embodiments of the uses.

The ranges disclosed in this description include both the lower and the upper limit thereof. For example, the expressions "ranging from x to y" or "between x and y" comprises the limits x and y.

### Examples

The following ingredients were used to prepare the compositions:
- PMMA (polymethylmethacrylate): Degalan^{®} LP 50/09 commercialized by Evonik
- MECA (methoxyethyl cyanoacrylate) commercialized by Crackless Monomer Company (CMC)
- Boron Trifluoride Etherate complex commercialized by Sigma Aldrich (Merck)
- Ferrocene: Sigma Aldrich (Merck)
- Mixture G : SR833 tricyclodecanedimethanol diacrylate/ SR368 tris(2-hydroxyethyl)isocyanurate triacrylate (7/3)
- TMA: Trimellitic acid sold by TCI;
- Levamelt 700: Ethylene-vinyl acetate copolymer (EVM) with 70 wt % vinyl acetate commercialized by Arlanxeo;
- Vinnol H40/60: 61 wt.% vinyl chloride (VC) and approx. 39 wt.% of vinyl acetate (VAc) commercialized by Wacker;
- PMMA: poly(methyl methacrylate) also known as methyl polymethacrylate commercialized by Evonik;
- GTH: Glycerol Trienanthate sold by Oleon;
- TPO: Diphenyl(2,4,6 trimethylbenzoyl)phosphine oxide commercialized by
- BAPO: Phenylbis(2,4,6-trimethylbenzoyl) phosphineoxide) commercialized by TCI;
- TMSPM: 3-(Trimethoxysilyl)propyl methacrylate sold by Sigma-Aldrich

### Grit blasted mild steel (GBMS) and polycarbonate (PC) lapshears (for all mechanical testing)

The following tests were done to evaluate performances:
Tensile shear strength test data reflect bond strength measured in MPa after assembling overlapping lapshears (standard test pieces of grit blasted mild steel (GBMS) and PC) with a contact area of 250 mm² measured according to ASTM D1002. The two substrates are bonded with a gap of 250 microns by using spacers leading to this thickness/gap. The bonded lapshears were first clamped and 'rested' for 24 h at room temperature (23°C ± 2°C) after assembly before testing. The tests were carried out with an Instron tensile tester operating with a crosshead speed of 1.3 mm/min.

Testing for hot strength ("service temperature") was conducted on the GBMS/PC lapshears heated to specific individual temperatures of 100°C. The heated samples were insulated with textile thermal lagging into which a thermocouple was also placed next to the substrate surfaces so actual temperature during destructive testing could be tracked. The samples were subjected to tensile loads while they are maintained at high temperatures during the actual destructive testing process.

Drop test is a qualitative test that reflects the ability of an adhesive polymer to withstand by being dropped from a specific distance. Assembled lapshears of Alu5754 and PMMA contains the adhesive in 160mm2 overlap (for a gap/thickness between substrates of 250 microns) or 250mm2 (for a gap/thickness between substrates of 50 microns). The adhesive is photocured for 120s, using a lamp of 395-405 nm wavelength and 10.2mW/cm² of irradiance intensity. After 24h, the lap shears are dropped from various distances between 0 and 200cm having a flat impact of the lapshear on the floor. The sample needs to withstand 3 times the maximum distance, and 4 replicas are tested at the same distance.

Testing for acrylate conversion was carried out with a Jasco 6600 Real-Time Fourier Transformed Infrared Spectrometer (RT-FTIR) was used to follow the methacrylate function conversion versus time for polymerizations of 50 microns and 250 microns thick samples. The evolution of the near infrared acrylate C=C double bond peak was followed 6160 cm-1.

### Example 1 : synthesis of photoinitiator P1

### 1a : synthesis of Precursor 1

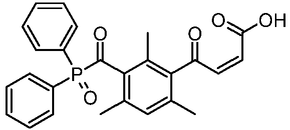

To an ice-cooled solution of 2,4,6-trimethylbenzoyldiphenylphosphine oxide (SpeedCure^{®} TPO from Arkema - 85.0 g, 244 mmol) and maleic anhydride (28.7 g, 293 mmol) in dichloromethane (850 mL) was added aluminium chloride (129 g, 968 mmol) portion-wise over 1 h while maintaining the reaction temperature at 5-10 °C. The resulting deep red solution was heated at 30-32°C for 48 h. The mixture was allowed to cool to 20°C, then was poured into ice water (approx. 1 L) with stirring. Dichloromethane was removed from the biphasic mixture by concentration under reduced pressure, then the resulting aqueous slurry was filtered to obtain the crude solid product. The product was washed repeatedly with water, then was suspended in toluene (500 mL) and filtered. The obtained solid was thoroughly dried in a vacuum oven at 60°C, giving **Precursor 1** as a pale yellow powder (97 g, 89%).

### 1b: Synthesis of Precursor 2

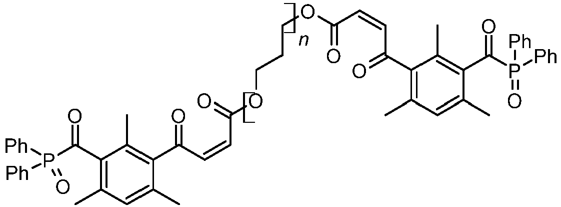

To a suspension of **Precursor 1** (240 g, 538 mmol) and 1,3-poly-propanediol having a number average molecular weight of 200-300 g/mol (Velvetol^{®} H250 from Wey!Chem - 67.3 g, 269 mmol) in toluene (1.4 L) was added methanesulphonic acid (24 mL, 370 mmol) and the resulting mixture was heated at reflux temperature for 5 h, while water was continuously removed using a Dean-Stark apparatus. The mixture was allowed to cool to 20°C, then 5 wt% aqueous sodium carbonate solution (1 L) was added and the layers were separated. The organic phase was washed with water (200 mL) and brine (200 mL), then was dried (MgSO₄), filtered and concentrated under reduced pressure to give **Precursor 2** as a glassy yellow solid (290 g, 97%).

### 1c: Synthesis of Photoinitiator P1

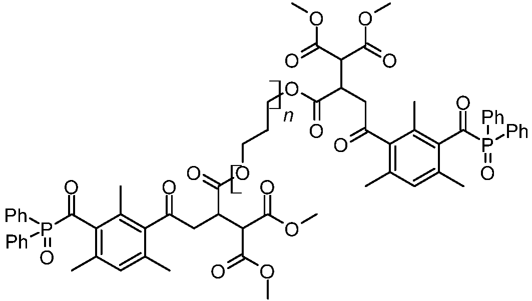

To a solution of **Precursor 2** (186 g, 168 mmol) in toluene (1 L) were added dimethyl malonate (46.4 g, 352 mmol) and potassium carbonate (81.0 g, 586 mmol) and the resulting suspension was heated at 90°C for 2.5 h. The mixture was allowed to cool to 20°C, then 2M hydrochloric acid (1 L) was slowly added as carbon dioxide was evolved. When gas evolution ceased, the layers were mixed well and separated, then the organic phase was washed with water (400 mL) and brine (250 mL). The organic phase was then dried (MgSO₄), filtered and concentrated under reduced pressure to give **Photoinitiator P1** as a glassy, pale-yellow solid (223 g, 97%). Molecular weight of the **Photoinitiator P1** is 1349 g/mol.

### Example 2: preparation of compositions

Compositions were prepared as follows according to the nature and content of the ingredients disclosed in table 1: the monomers were directly mixed with the radical and acid stabilizing agents in a high-density polyethylene container, at 23°C, mechanical stirring until complete dissolution. The other components were added one by one.

**Table 1: compositions (1 is comparative, 2-8 are according to the invention)**

| **Component** | **1 (comparative) (weight %)** | **2 (weight %)** | **3 (weight %)** | **4 (weight %)** |
|---|---|---|---|---|
| MECA | 99,52 | 79,512 | 79,512 | 79,512 |
| BF₃·Et₂O | 0,003 | 0,003 | 0,003 | 0,003 |
| Mixture G | 0 | 20,0 | 20,0 | 20,0 |
| Ferrocene | 0,02 | 0,02 | 0,02 | 0,02 |
| GTH | 0,38 | 0,38 | 0,38 | 0,38 |
| Ivocerin | 0,075 | 0 | 0 | 0,0 |
| Citric acid | 0,01 | 0,01 | 0,01 | 0,01 |
| BAPO | 0 | 0,3 | 0 | 0 |
| TPO | 0 | 0 | 0,18 | 0 |
| Photinitiator P1 | 0 | 0 | 0 | 0,5 |

| **Component** | **5 (weight %)** | **6 (weight %)** | **7 (weight %)** | **8 (weight %)** |
|---|---|---|---|---|
| MECA | 78,4825 | 66,4725 | 66,4725 | 66,4825 |
| BF₃·Et₂O | 0,0075 | 0,0075 | 0,0075 | 0,0075 |
| Mixture G | 20 | 20 | 20 | 20 |
| Ferrocene | 0,02 | 0,02 | 0,02 | 0,02 |
| GTH | 0,98 | 0,98 | 0,98 | 0,98 |
| Trimellitic acid | 0,01 | 0,01 | 0,01 | 0,01 |
| TMSPM | 0 | 0,01 | 0,01 | 0 |
| Photoinitiator P1 | 0,5 | 0,5 | 0,5 | 0,5 |
| Levamelt | 0 | 12 | 6 | 6 |
| Vinnol | 0 | 0 | 6 | 0 |
| PMMA | 0 | 0 | 0 | 6 |

### Example 3 : results

The following table comprises all the results of hot strength and acrylate conversion.

| | GBMS/PC lapshear Hot strength (100°C) MPa | | | | | Acrylate C=C FTIR conversion | |
|---|---|---|---|---|---|---|---|
| | Composition 1 (comparative) | Composition 2 | Composition 3 | Composition 4 | | Composition 1 | Composition 4 |
| Lapshear with thickness of 50 microns between substrates (Comparative) | 1 | 1 | 1 | 1 | | Not apply | <15% |
| Lapshear with thickness of 250 microns between substrates | 2 | 4 | 4 | 4 | | Not apply | 80% |

It appears from this table, that the acrylate conversion in composition 4 (invention) is much higher than conversion of comparative composition 1 (80% versus less than 15% respectively).

Besides, the compositions 2, 3 and 4 (invention) advantageously leads to cured product having a hot strength (100°C) of 4MPa with a thickness of 250 microns between substrates compared to comparative composition 1 (2 MPa only). Better hot strength is also obtained with compositions 2, 3 and 4 (invention) with thickness of 250 microns compared to 50 microns (4 MPa versus 1 MPa).

| | Drop test A5754/PMMA (cm) | | | | |
|---|---|---|---|---|---|
| | | Composition 5 | Composition 6 | Composition 7 | Composition 8 |
| Thickness of 250 microns between substrates | | 50 | 100 | 200 | 120 |

## Claims

1. Use of a composition comprising:
- a cyanoacrylate C;
- a photoinitiator P;
- a (meth)acrylate A;
**characterized in that** the composition does not comprise a compound having formula (M) and the composition does not comprise a compound having formula (N): 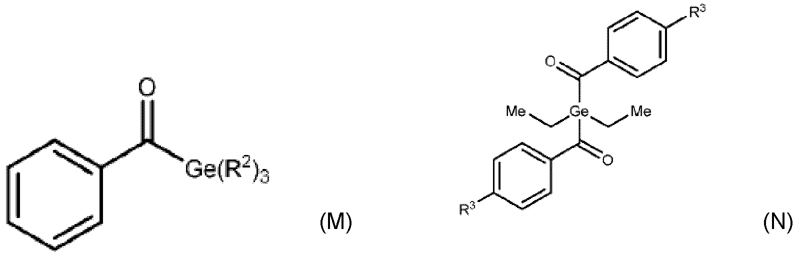
wherein R² is a methyl or a phenyl group; R³ is hydrogen or a methoxy group;
for preparing a coating, said coating having a thickness of at least 150 microns; or
for gap filling, said gap being of at least 150 microns; or
for bonding at least two substrates having a gap between said substrates of at least 150 microns.

2. Use according to claim 1, wherein the cyanoacrylate C is selected from the group consisting of mono-functional cyanoacrylate, multi-functional cyanoacrylate including bifunctional cyanoacrylate, hybrid cyanoacrylate, and mixtures thereof.

3. Use according to anyone of claim 1 or claim 2, wherein the cyanoacrylate C is selected from the group consisting of methyl cyanoacrylate, ethyl cyanoacrylate, n-propyl cyanoacrylate, iso-propyl cyanoacrylate, n-butyl cyanoacrylate, sec-butyl cyanoacrylate, iso-butyl cyanoacrylate, tert-butyl cyanoacrylate, n-pentyl cyanoacrylate, 1-methylbutyl cyanoacrylate, 1-ethylpropyl cyanoacrylate, neopentyl cyanoacrylate, n-hexyl cyanoacrylate, 1-methylpentyl cyanoacrylate, n-heptyl cyanoacrylate, *n*-octyl cyanoacrylate, 2-octyl cyanoacrylate, 2-ethylhexyl cyanoacrylate, *n*-nonyl cyanoacrylate, *n*-decyl cyanoacrylate, *n*-undecyl cyanoacrylate, n-dodecyl cyanoacrylate, n-octadecyl cyanoacrylate, allyl cyanoacrylate, cyclohexyl cyanoacrylate, 2-methoxyethyl cyanoacrylate, 2-ethoxyethyl cyanoacrylate, phenoxyethyl cyanoacrylate, 2-(1-alkoxy)propyl cyanoacrylate (for example 2-(1-methoxy)propyl cyanoacrylate), 2-(2'-alkoxy)-methoxyethyl-2"-cyanoacrylate (for example 2-(2'-methoxy)-methoxyethyl-2"-cyanoacrylate), 2-(2'-alkoxy)-ethoxyethyl-2"-cyanoacrylate (for example 2-(2'-methoxy)-ethoxyethyl-2"-cyanoacrylate, 2-(2'-ethoxy)-ethoxyethyl-2"-cyanoacrylate, 2-(2'-propyloxy)-ethoxyethyl-2"-cyanoacrylate, 2-(2'-butoxy)-ethoxyethyl-2''-cyanoacrylate, 2-(2'-pentyloxy)-ethoxyethyl-2"-cyanoacrylate or 2-(2'-hexyloxy)-ethoxyethyl-2"-cyanoacrylate), 2-(2'-alkoxy)-propyloxypropyl-2"-cyanoacrylate (for example 2-(2'-methoxy)-propyloxypropyl-2"-cyanoacrylate, 2-(2'-ethoxy)-propyloxypropyl-2"-cyanoacrylate, 2-(2'-propyloxy)-propyloxypropyl-2"-cyanoacrylate, 2-(2'-butyloxy)-propyloxypropyl-2"-cyanoacrylate, 2-(2'-pentyloxy)-propyloxypropyl-2"-cyanoacrylate, 2-(2'-hexyloxy)-propyloxypropyl-2"-cyanoacrylate), 2-(2'-alkoxy)-butyloxybutyl-2"-cyanoacrylate (for example 2-(2'-methoxy)-butyloxybutyl-2"-cyanoacrylate, 2-(2'-ethoxy)-butyloxybutyl-2"-cyanoacrylate, 2-(2'-butyloxy)-butyloxybutyl-2"-cyanoacrylate), 2-(3'-alkoxy)-propyloxyethyl-2"-cyanoacrylate for example 2-(3'-methoxy)-propyloxyethyl-2"-cyanoacrylate), 2-(3'-alkoxy)-butyloxyethyl-2"-cyanoacrylate (for example 2-(3'-methoxy)-butyloxyethyl-2"-cyanoacrylate), 2-(3'-alkoxy)-propyloxypropyl-2"-cyanoacrylate (for example 2-(3'-methoxy)-propyloxypropyl-2"-cyanoacrylate), 2-(3'-alkoxy)-butyloxypropyl-2"-cyanoacrylate (for example 2-(3'-methoxy)-butyloxypropyl-2"-cyanoacrylate 2-(2'-alkoxy)-ethoxypropyl-2"-cyanoacrylate (for example 2-(2'-methoxy)-ethoxypropyl-2"-cyanoacrylate), 2-(2'-alkoxy)-ethoxybutyl-2"-cyanoacrylate (for example 2-(2'-methoxy)-ethoxybutyl-2"-cyanoacrylate), trimethylsilyethyl cyanoacrylate, trimethylsilypropyl cyanoacrylate, trimethylsilyloxyethyl cyanoacrylate triethylsilyloxyethyl cyanoacrylate, phenylethyl cyanoacrylate, and mixtures thereof.

4. Use according to anyone of claims 1 to 3, wherein the cyanoacrylate C is a mono-functional cyanoacrylate, preferably selected from the group consisting of 2-methoxyethyl cyanoacrylate, methyl cyanoacrylate, ethyl cyanoacrylate, n-butyl cyanoacrylate, n-heptyl cyanoacrylate, n-octyl cyanoacrylate, iso-propyl cyanoacrylate , 2-ethylhexyl cyanoacrylate, or mixtures thereof.

5. Use according to anyone of claims 1 to 4, wherein the composition comprises from 60% to 99.5% by weight of cyanoacrylate(s) C, more preferably from 70% to 99% by weight of cyanoacrylate(s) C, and even more preferably from 80% to 97% by weight of cyanoacrylate(s) C based on the total weight of the composition.

6. Use according to anyone of claims 1 to 5, wherein the photoinitiator P is selected from the group consisting of benzoins, benzoin ethers, acetophenones, α-hydroxy acetophenones, benzil, benzil ketals, anthraquinones, phosphine oxides, acylphosphine oxides, α-hydroxyketones, phenylglyoxylates, α-aminoketones, benzophenones, thioxanthones, xanthones, acridine derivatives, phenazine derivatives, quinoxaline derivatives, triazine compounds, benzoyl formates, aromatic oximes, metallocenes, acylsilyl compounds, camphorquinones, polymeric derivatives thereof, and mixtures thereof;
preferably the photoinitiator P being selected from acyl phosphine oxides.

7. Use according to anyone of claims 1 to 6, wherein the (meth)acrylate A is selected from the group consisting of a (meth)acrylate-functionalized monomer, a (meth)acrylate-functionalized oligomer and mixtures thereof.

8. Use according to anyone of claims 1 to 7, wherein the (meth)acrylate A is a (meth)acrylate functionalized monomer comprising a mono(meth)acrylate-functionalized monomer.

9. Use according to claim 8, wherein the mono(meth)acrylate functionalized monomer is selected from the group consisting of: methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; alkoxylated phenol (meth)acrylates; alkoxylated nonylphenol (meth)acrylates; cyclic trimethylolpropane formal (meth)acrylate; isobornyl (meth)acrylate; tricyclodecanemethanol (meth)acrylate; tert-butylcyclohexanol (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; and combinations thereof.

10. Use according to anyone of claims 1 to 7, wherein the (meth)acrylate A is a (meth)acrylate functionalized monomer comprising a (meth)acrylate-functionalized monomer containing two or more (meth)acrylate groups per molecule.

11. Use according to claim 10, wherein the (meth)acrylate-functionalized monomer containing two or more (meth)acryloyloxy groups per molecule include bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth)acrylate; dipropylene glycol di(meth)acrylate; tripropylene glycol di(meth)acrylate; tetrapropylene glycol di(meth)acrylate; polypropylene glycol di(meth)acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth)acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; 2-methyl-2,4-pentanediol di(meth)acrylate; polybutadiene di(meth)acrylate; cyclohexane-1,4-dimethanol di(meth)acrylate; tricyclodecane dimethanol di(meth)acrylate; metallic di(meth)acrylates; modified metallic di(meth)acrylates; glyceryl di(meth)acrylate; glyceryl tri(meth)acrylate; trimethylolethane tri(meth)acrylate; trimethylolethane di(meth)acrylate; trimethylolpropane tri(meth)acrylate; trimethylolpropane di(meth)acrylate; pentaerythritol di(meth)acrylate; pentaerythritol tri(meth)acrylate; pentaerythritol tetra(meth)acrylate, di(trimethylolpropane) diacrylate; di(trimethylolpropane) triacrylate; di(trimethylolpropane) tetraacrylate, sorbitol penta(meth)acrylate; di(pentaerythritol) tetraacrylate; di(pentaerythritol) pentaacrylate; di(pentaerythritol) hexa(meth)acrylate; tris (2-hydroxyethyl) isocyanurate tri(meth)acrylate ; dendritic acrylates; as well as the alkoxylated (e.g., ethoxylated and/or propoxylated) derivatives thereof; and combinations thereof.

12. Use according to anyone of claims 1 to 11, wherein the (meth)acrylate A is a (meth)acrylate functionalized monomer selected from the group consisting of butanediol di(meth)acrylate, hexanediol di(meth)acrylate, diethylene glycol di(meth)acrylate, triethyleneglycol di(meth)acrylate, polyethylene glycol di(meth)acrylate, trimethylolpropane tri(meth)acrylate (TMPTA), ethoxylatedtrimethylolpropane tri(meth)acrylate, neopentylglycoldiacrylate, pentaerythritoltetraacrylate (PETA), pentaerythritoltetramethacrylate (PETMA), dipentaerythritolpenta(meth)acrylate, tri(2-hydroxyethyl)isocyanurate tri(meth)acrylate, dipentaerythritolhexa(meth)acrylate, dendritic acrylates, bisphenol-A-diacrylate, bisphenol-A-dimethacrylate, ethoxylatedbisphenol-A-diacrylate, tricyclodecane dimethanol diacrylate, propoxylatedbisphenol-A-diacrylate, and mixtures thereof.

13. Use according to anyone of claims 1 to 12, wherein the composition comprises a metallocene compound.

14. Use according to anyone of claims 1 to 13, wherein the composition comprises at least one thickener, the thickener being preferably selected from the group consisting of poly(meth)acrylates, polyvinylpyrrolidones, polyvinyl acetates, partially hydrolysed polyvinyl acetates, vinyl acetate copolymers, acylated cellulose polymers, polyoxylates, polycaprolactones, ethylene-acrylic copolymers, copolymers of lactic acid and caprolactone, and mixtures thereof.

15. Method for bonding a substrate S1 to a substrate S2, said method comprising the steps of:
1) applying a composition into a cavity or gap between substrates S1 and S2, said cavity or gap being of at least 150 microns;
2) curing of the composition;
or
said method comprising the steps of:
1') applying the composition of the invention to a substrate S1;
2') contacting the composition applied with a substrate S2, wherein the thickness of the composition applied after step 2') is of at least 150 microns;
3') curing of the composition;
wherein the composition comprises:
- a cyanoacrylate C;
- a photoinitiator P;
- a (meth)acrylate A;
**characterized in that** the composition does not comprise a compound having formula (M) and the composition does not comprise a compound having formula (N): 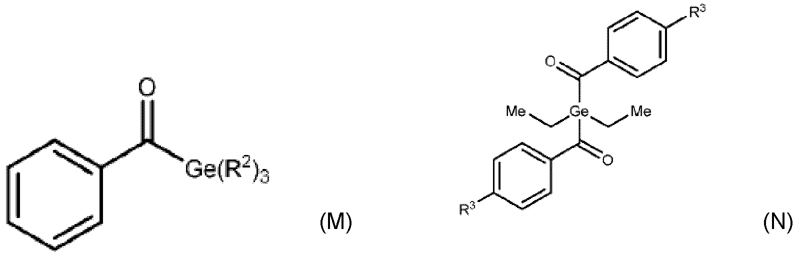 wherein R² is a methyl or a phenyl group; R³ is hydrogen or a methoxy group.

16. Method for coating a substrate comprising the steps of:
i) applying the composition of the invention to a substrate, wherein the thickness of the composition applied is of at least 150 microns,
ii) curing of the composition,
wherein the composition comprises:
- a cyanoacrylate C;
- a photoinitiator P;
- a (meth)acrylate A;
**characterized in that** the composition does not comprise a compound having formula (M) and the composition does not comprise a compound having formula (N): 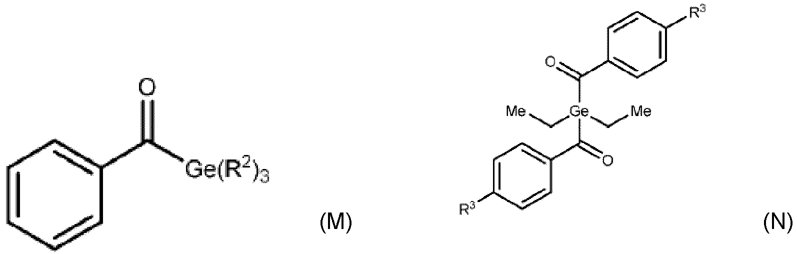 wherein R² is a methyl or a phenyl group; R³ is hydrogen or a methoxy group.

17. Method of filling joins and/or gaps in a substrate comprising the steps of:
a) applying the composition of the invention to the gap and/or join to be filled in the substrate with a thickness of at least 150 microns;
b) curing of the composition in the join and/or gap,
wherein the composition comprises:
- a cyanoacrylate C;
- a photoinitiator P;
- a (meth)acrylate A;
**characterized in that** the composition does not comprise a compound having formula (M) and the composition does not comprise a compound having formula (N): 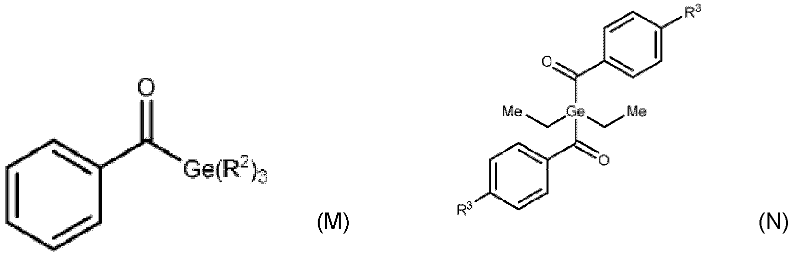 wherein R² is a methyl or a phenyl group; R³ is hydrogen or a methoxy group.

18. Article coated, bonded or gap filled with according to any of the methods of claims 15 to 17.

19. Method of conferring improved hot strength to a cured product of a composition, said method comprising:
1) Providing a composition comprising a cyanoacrylate C, a photoinitiator P, a (meth)acrylate A, said composition does not comprise a compound having formula (M) and said composition does not comprise a compound having formula (N);
2) Applying the composition to at least one substrate and;
3) Contacting the substrates together;
4) Curing for a time sufficient to form a cured product of the composition therebetween to form a bonded assembly wherein the thickness of the composition applied after step 2) is of at least 150 microns.
